# EUROPÄISCHE PATENTSCHRIFT

(11) **EP 3 019 269 B1**
(45) Veröffentlichungstag und Bekanntmachung des Hinweises auf die Patenterteilung: **08.08.2018**
(21) Anmeldenummer: 14730518.9
(22) Anmeldetag: 13.06.2014
(51) Int. Cl.: B01F 5/04, C01B 33/18, C01B 13/20, C01B 13/24

(54) **VERFAHREN ZUR HERSTELLUNG VON KIESELSÄURE MIT VARIABLER VERDICKUNG**
METHOD FOR PREPARATION OF SILICIC ACID WITH VARIABLE THICKENING
PROCÉDÉ DE FABRICATION D'ACIDE SILICIQUE AVEC ÉPAISSISSEMENT VARIABLE

(30) Priorität: 11.07.2013 EP 13176112
(43) Veröffentlichungstag der Anmeldung: 18.05.2016
(73) Patentinhaber: Evonik Degussa GmbH, 45128 Essen (DE)
(72) Erfinder: SCHULZE ISFORT, Christian, B-2950 Kapellen (BE); GOLCHERT, Rainer, 64807 Dieburg (DE); ROTH, Helmut, 63814 Mainaschaff (DE); HILLE, Andreas, 79541 Lörrach (DE); SCHUMACHER, Kai, 65719 Hofheim (DE)
(86) Internationale Anmeldenummer: PCT/EP2014/062356
(87) Internationale Veröffentlichungsnummer: WO 2015/003873

(56) Entgegenhaltungen:
- EP-A1- 1 302 236
- EP-A1- 1 486 461
- DE-A1- 2 048 220
- US-A- 3 363 980

## Beschreibung

Die Erfindung betrifft ein Verfahren zur Herstellung von Kieselsäure mit variabler Verdickung, bei dem die Einsatzstoffe vor dem Eintritt in eine Reaktionskammer mittels statischer Mischelemente gemischt werden.

Verfahren zur Herstellung pyrogener Kieselsäuren mit hoher Verdickung sind bekannt. So wird in DE-A-2609487 ein Verfahren offenbart, bei dem pyrogen gewonnene Kieselsäure in einem nachfolgenden Schritt mit Siliciumtetrachlorid behandelt und anschließend mit einem Luft/Wasserdampf-Gemisch hydrolysiert sowie entsäuert wird.

In DE-A-2904199 wird ein Verfahren vorgeschlagen, bei dem man in das Reaktionsgemisch zusätzliche Mengen an Wasserdampf, welche nicht aus der Verbrennung von für die Flammenhydrolyse notwendigen Wasserstoff enthaltenden Gasen resultieren, einführt.

EP-A-38900 nennt ein Verfahren zur Herstellung von pyrogener Kieselsäure mit hoher Verdickung bei dem Siloxane in Gegenwart von Wasserstoff und Luft umgesetzt werden.

EP-A-97378 offenbart ein Verfahren zur Einstellung der Verdickung bei dem der Pyrolyseflamme zusätzliche Energie, beispielsweise in Form eines Brenngases zugeführt wird.

EP-A-634360 offenbart ein Verfahren, bei dem mittels einer Gaskanone in der Brennkammer Gasentladungen erzeugt werden.

WO2006/087136 wird ausgeführt, dass hochverdickende Kieselsäuren erhalten werden können, indem man Bedingungen herstellt, die zu einer hoch gleichmäßigen, radialen Temperaturverteilung führen, ohne diese Bedingungen näher zu spezifizieren.

Die im Stand der Technik benannten Lösungen zur Herstellung hochverdickender pyrogener Kieselsäure gehen entweder von teuren Einsatzstoffen aus oder verlangen kostenintensive apparative Änderungen. Aufgabe der vorliegenden Erfindung war es daher ein Verfahren bereitzustellen, welches es ermöglicht Kieselsäure mit variabler Verdickung bereitzustellen, welches geringe Apparatekosten verursacht und das einfach und wirtschaftlich durchzuführen ist.

Gegenstand der Erfindung ist ein Verfahren zur Herstellung von Kieselsäure mit variabler Verdickung, bei dem man
a) einen Stoffstrom I enthaltend wenigstens eine dampfförmige, hydrolysierbare und/oder oxidierbare Siliciumverbindung,
b) einen Stoffstrom II enthaltend Sauerstoff und
c) einen Stoffstrom III enthaltend wenigstens ein Brenngas zur Reaktion bringt, wobei man
d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend
e) über eine in einem Rohrstück B vorgesehenen Einspeisestelle, wobei das Rohrstück B ein oder mehrere statische Mischelemente umfasst,
   in den Stoffstrom IV den Stoffstrom III einbringt und dadurch den Stoffstrom V erzeugt,
f) den das Rohrstück B verlassenden Stoffstrom V in eine Reaktionskammer einbringt, dort zündet und in einer Flamme umsetzt und
g) den entstandenen Feststoff abtrennt, wobei
   die Geschwindigkeit v_{B} mit der der Stoffstrom III in den Stoffstrom IV eingebracht wird größer ist als die Geschwindigkeit v_{A} des Stoffstromes IV zum Zeitpunkt des Einbringens des Stoffstromes III und wobei sich
   vA durch Division des Volumenstromes mit der Einheit Nm3/h und der Querschnittsfläche des Rohrstückes A ergibt und
   v_{B} durch Division des Volumenstromes mit der Einheit Nm³/h und der Querschnittsfläche der Einspeisestelle ergibt.

Unter hydrolysierbar im Sinne der Erfindung ist zu verstehen, dass die Siliciumverbindung in Gegenwart von Wasserdampf in Kieselsäure und ein unter den Reaktionsbedingungen gasförmiges Beiprodukt umgewandelt werden. Beispiele hierfür sind:

SiCl₄ + 2H₂O → SiO₂ + 4HCl; Si(OEt)₄ + 2H₂O → SiO₂ + 4EtOH.

Unter oxidierbar im Sinne der Erfindung ist zu verstehen, dass die Siliciumverbindung in Gegenwart von Sauerstoff in Kieselsäure und ein gasförmiges Beiprodukt umgewandelt werden. Beispiel hierfür ist:

SiCl₄ + O₂ → SiO₂ + 2Cl₂.

Im Rahmen der Erfindung werden Volumina und Geschwindigkeiten normiert angegeben. Dabei steht Nm³ für ein Volumen bei einem Druck von 1,01325 bar und einer Temperatur von 0°C. Nm/s steht für eine aus dem Volumen und einem Querschnitt berechneten normierten Geschwindigkeit.

Bei dem die statischen Mischelemente umfassenden Rohrstück A und/oder B handelt es sich um sogenannte statische Mischer oder Statikmischer, die von den zu mischenden Stoffströmen durchströmt werden. Diese zeichnen sich dadurch aus, dass sie die Bildung von Sekundärströmungen hervorrufen, die sich über größere Bereiche erstrecken. Zusätzlich werden turbulente Bereiche gebildet, die zu einer feineren Vermischung führen. Prinzipiell ist die Auswahl des statischen Mischers nicht beschränkt. Beispiele von gemäß der vorliegenden Erfindung einsetzbarer statischer Mischer finden sich beispielsweise in US4758098 oder US5522661. Dabei können die statischen Mischelemente umfassenden Rohrstücke A und B bezüglich ihrer Dimension und der Art der Mischelemente gleich oder verschieden sein.

Bevorzugt jedoch können im erfindungsgemäßen Verfahren Flanschmischer eingesetzt werden, bei denen nach den statischen Mischelementen Mischvorgänge stattfinden. Ein solcher Flanschmischer ist beispielsweise in US5839828 offenbart, bei dem der einzuspeisende Reaktionsstrom über eine oder mehrere Blenden zugeführt wird.

In EP-A-1153650 wird der einzuspeisende Reaktionsstrom über eine Ringdosiereinrichtung mit einer besonderen Flügelanordnung eingebracht.

Besonders bevorzugt können die Rohrstücke A und/oder B als Flanschmischer wie in EP-A-1302236 offenbart ausgeführt sein. Diese weisen die in EP-A-1153650 offenbarte Flügelanordnung auf, anstelle der Ringdosiereinrichtung ist jedoch eine einzige punktuelle Einspeisestelle vorgesehen.

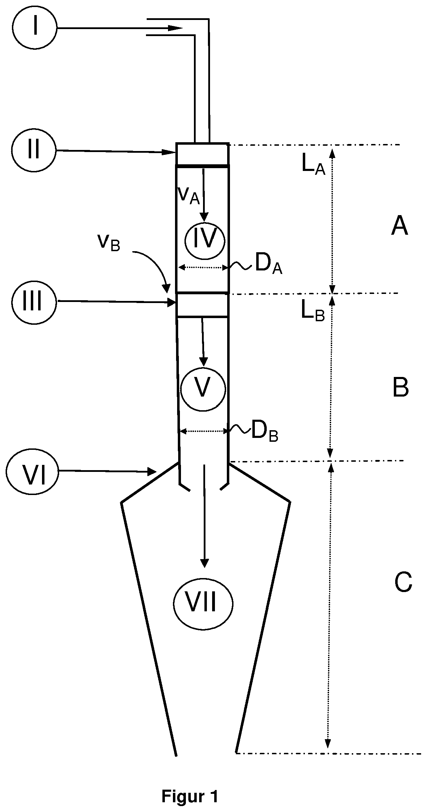

Ganz besonders bevorzugt ist eine Ausführungsform bei der der in EP-A-1493485 offenbarte statische Mischer eingesetzt wird. Bei diesem handelt es sich um einen statischen Mischer mit in einem Rohrstück angeordneten Einbauten, die flache, gefaltete oder gekrümmte Strömungshindernisse sowie dazwischen liegende Engpässe umfassen, wobei die primären Strömungshindernisse auf ihren Oberflächen und/oder an ihren Rändern geometrisch modifiziert sind, und durch diese Modifikationen in einem ersten Stoffstrom lokale Strömungen zweiter Ordnung induzierbar sind, die sich der Strömung erster Ordnung überlagern und so die Mischgüte verbessern, nämlich derart, dass radiale und axiale Inhomogenitäten im Fluid besser als durch die Strömung erster Ordnung ausgeglichen werden. Der statischer Mischer enthält eine Einspeisestelle für einen weiteren Stoffstrom, die in eine Zone des Mischbereiches der ersten Stoffstromes mündet, in der die Beeinflussung der Strömung durch die geometrischen Modifikationen besonders stark ausgebildet ist. Es wird auf explizit auf die Figur 1 in EP-A-1493485 verwiesen.

In einer besonderen Ausführungsform der Erfindung gilt L_{A}/D_{A} = 2 - 20, wobei L_{A} die Länge des Rohrstückes A und D_{A} der innere Durchmesser des Rohrstückes A ist. Besonders bevorzugt ist eine Ausführungsform bei der L_{A}/D_{A} = 3 - 6 ist.

In einer weiteren besonderen Ausführungsform der Erfindung gilt L_{B}/D_{B} = 2 - 20, wobei L_{B} die Länge des Rohrstückes B und D_{B} der innere Durchmesser des Rohrstückes B ist. Besonders bevorzugt ist eine Ausführungsform bei der L_{B}/D_{B} = 3 - 6 ist.

Figur 1 zeigt schematisch eine Ausführungsform der Erfindung. Dabei gilt:
A, B = Rohrstück A, beziehungsweise Rohrstück B mit der jeweiligen Länge L und dem inneren Durchmesser D;
C = Reaktionskammer;
I - VII = Stoffströme;
Stoffstrom I enthaltend wenigstens eine dampfförmige, hydrolysierbare und/oder oxidierbare Siliciumverbindung,
Stoffstrom II enthaltend molekularen Sauerstoff ,
Stoffstrom III enthaltend wenigstens ein Brenngas,
Stoffstrom IV erzeugt, indem man über eine in einem ein oder mehrere statische Mischelemente umfassenden Rohrstück A vorgesehene Einspeisestelle den Stoffstrom I in den Stoffstrom II oder umgekehrt einbringt,
Stoffstrom V erzeugt, indem man über eine in einem ein oder mehrere statische Mischelemente umfassenden Rohrstück B vorgesehene Einspeisestelle in den Stoffstrom IV den Stoffstrom III einbringt,
Stoffstrom VI enthaltend Sauerstoff und/oder Wasserdampf,
Stoffstrom VII enthaltend wenigstens die Reaktionsprodukte Kieselsäure und Wasser, gegebenenfalls Kohlendioxid und Salzsäure.

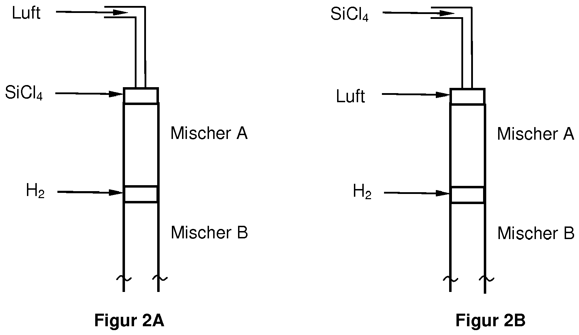

Die Figuren 2A und 2B zeigen mögliche Ausführungsformen der Erfindung bezüglich der Stoffströme I bis III. Figur 2A zeigt die Einspeisung des SiCl₄ enthaltenden Stoffstromes I in das ein oder mehrere statische Mischelemente umfassende Rohrstück A. Figur 2B zeigt die Einspeisung des den molekularen Sauerstoff enthaltenden Stoffstromes II in das ein oder mehrere statische Mischelemente umfassende Rohrstück A. In beiden Fällen erfolgt die Einspeisung des Stoffstromes III in das ein oder mehrere statische Mischelemente umfassende Rohrstück B.

Für das erfindungsgemäße Verfahren gilt, dass die Geschwindigkeit v_{B} mit der der Stoffstrom III in den Stoffstrom IV eingebracht wird größer ist als die Geschwindigkeit v_{A} des Stoffstromes IV zum Zeitpunkt des Einbringens des Stoffstromes III ist. Bevorzugt ist eine Ausführungsform, bei der v_{B}/v_{A} ≥ 4. Die Geschwindigkeit des Stoffstromes I und des Stoffstromes II ist nicht kritisch, solange dafür gesorgt wird, dass der Stoffstrom I im dampfförmigen Zustand verbleibt. Die Maßnahmen hierfür sind dem Fachmann bekannt. Als allgemeine Regel für die vorliegende Erfindung gilt, dass die Geschwindigkeit des Stoffstromes, der über die Einspeisestelle des Rohrstückes A eingebracht wird mindestens doppelt so hoch ist wie die Geschwindigkeit des anderen Stoffstromes sein sollte.

v_{A} beträgt bevorzugt wenigstens 15 Nm/s. Als besonders geeignet hat sich ein Bereich von 20 bis 100 Nm/s erwiesen. v_{B} beträgt bevorzugt wenigstens 50 Nm/s. Besonders bevorzugt ist 100 ≤ v_{B} ≤ 1500 Nm/s. Zur Herstellung hochverdickender Kieselsäure wird das erfindungsgemäße Verfahren bevorzugt so ausgeführt, dass als Brenngas Wasserstoff eingesetzt wird und 100 ≤ v_{B} ≤ 1500 Nm/s und 20 ≤ v_{A} ≤ 50 Nm/s ist. Bei den Angaben zur Geschwindigkeit handelt es sich um normierte Geschwindigkeiten. v_{A} ergibt sich durch Division des Volumenstromes mit der Einheit Nm³/h und der Querschnittsfläche des Rohrstückes A. v_{B} ergibt sich durch Division des Volumenstromes mit der Einheit Nm³/h und der Querschnittsfläche der Einspeisestelle.

Aus dem Stand der Technik ist bekannt, dass eine Erhöhung der Verdickung durch eine Erhöhung der eingebrachten Brenngasmenge erzielt werden kann. Es hat sich nun gezeigt, dass die Verdickung allein durch Variation der Geschwindigkeiten v_{B} bei konstanten v_{A} variiert werden kann.

Prinzipiell ist das Verfahren nicht auf die Herstellung bestimmter Kieselsäuren eingeschränkt. Bevorzugt eignet es sich zur Herstellung von Kieselsäuren mit einer BET-Oberfläche von 50 - 500 m²/g, besonders bevorzugt 100 - 400 m²/g, ganz besonders bevorzugt 150 - 350 m²/g und insbesondere 180 - 280 m²/g.

Unter variabler Verdickung ist zu verstehen, dass bei annähernd gleicher BET-Oberfläche Kieselsäuren mit verschiedener Verdickung erhalten werden können. Unter annähernd gleicher BET-Oberfläche ist eine bestimmte BET-Oberfläche ± 25 m²/g, in der Regel ± 15 m²/g, zu verstehen. Das heißt beispielsweise, dass Kieselsäuren mit einer BET-Oberfläche von 200 ± 10 m²/g und einer Verdickung von 3000 - 3700 mPas erhalten werden können.

Ebenso ist es möglich Kieselsäuren mit annähernd gleicher Verdickung bei deutlich unterschiedlicher BET-Oberfläche zu erhalten. Das heißt beispielsweise, dass Kieselsäuren mit einer Verdickung von 3500 ± 100 mPas mit einer BET-Oberfläche von 110 ± 10 m²/g und 200 ± 10 m²/g erhalten werden können.

Die Verdickung, in mPas, wird bestimmt in einer Dispersion einer Kieselsäure in einem ungesättigten Polyesterharz mit einer Viskosität von 1300 ± 100 mPas bei einer Temperatur von 22°C und gemessen mit einem Rotationsviskosimeter bei einer Scherrate von 2,7 s und einer Temperatur von 25°C. Geeignete ungesättigte Polyesterharze umfassen Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3- oder 1,4-Butandiol oder neo-Pentylglykol ((CH₃)₂C(CH₂OH)₂), oder Polyole, wie Pentaerythrit, bevorzugt gelöst zu 30 bis 80 Gew.-%, bevorzugt 60 bis 70 Gew.-%, in einem olefinischen Reaktivverdünner als Lösemittel, wie zum Beispiel Monostyrol. Die Viskosität des Polyesterharzes beträgt 1300 +/- 100 mPas bei einer Temperatur von 22°C. 7,5 g Kieselsäure werden zu 142,5 g Polyesterharzes bei einer Temperatur von 22°C eingebracht und mittels eines Dissolvers bei 3000 min⁻¹ dispergiert. 60 g dieser Dispersion werden mit weiteren 90 g des ungesättigten Polyesterharzes versetzt und der Dispergiervorgang wird wiederholt. Geeignet als ungesättigtes Polyesterharz ist beispielsweise Ludopal® P6, BASF.

In der Regel wird das erfindungsgemäße Verfahren so ausgeführt, dass die Menge an Sauerstoff wenigstens ausreicht um die Siliciumverbindung und das Brenngas umzusetzen. In diesem Fall gilt, dass lambda größer oder gleich 1 ist. Lambda beschreibt das Verhältnis von eingespeistem Sauerstoff zu stöchiometrisch benötigtem Sauerstoff. Die stöchiometrisch benötigte Menge an Sauerstoff, läßt sich am Beispiel der Umsetzung von Siliciumtetrachlorid und Wasserstoff als Brenngas auf die beiden Reaktionsgleichungen

2H₂ + O₂ -> 2H₂O und SiCl₄ + 2H₂O -> SiO₂ + 4HCl

zurückführen. Beim Einsatz anderer Brenngase und Siliciumverbindungen sind entsprechende Gleichungen aufzustellen. Gamma beschreibt das Verhältnis von eingespeistem Wasserstoff zu stöchiometrisch benötigtem Wasserstoff.

Der Stoffstrom I gemäß der vorliegenden Erfindung umfasst wenigstens eine dampfförmige, hydrolysierbare und/oder oxidierbare Siliciumverbindung. In der Regel umfasst der Stoffstrom weiterhin ein Trägergas, beispielsweise Luft oder ein Inertgas wie Stickstoff. Besonders bevorzugt können als dampfförmige, hydrolysierbare und/oder oxidierbare Siliciumverbindung SiCl₄, CH₃SiCl₃, (CH₃)₂SiCl₂, (CH₃)₃SiCl, (CH₃)₄Si, HSiCl₃, (CH₃)₂HSiCl, CH₃CH₂CH₂SiCl₃, Si(OC₂H₅)₄, Si(OCH₃)₄, oder Mischungen hiervon eingesetzt werden.

Bevorzugt wird SiCl₄ alleine oder als Bestandteil von Mischungen eingesetzt. Geeignete Mischungen sind insbesondere solche, die neben SiCl₄ noch (CH₃)₃SiCl und/oder HSiCl₃ enthalten. Dabei ist es nicht entscheidend, ob SiCl₄ in diesen Mischungen die Haupt- oder eine Nebenkomponente darstellt. So können beispielsweise Mischungen eingesetzt werden die neben SiCl₄ 70 Gew.-% oder mehr CH₃SiCl₃ oder 10 Gew.-% oder mehr HSiCl₃ enthalten.

In einer besonderen Ausführungsform der Erfindung umfasst die dampfförmige, hydrolysierbare und/oder oxidierbare Siliciumverbindung das bei der Herstellung von polykristallinem Silicium aus HSiCl₃ anfallende Nebenprodukt, welches als Hauptbestandteile 60 - 99% Gew.-% SiCl₄ und 0,5 - 40% HSiCl₃ und als Nebenbestandteile mit einem Anteil von weniger als 5 Gew.-% H₂SiCl₂, SiH₄ und H₃SiCl und HCl enthält, jeweils bezogen auf das Nebenprodukt.

Der Stoffstrom II umfasst Sauerstoff. In der Regel wird dies Luft oder mit Sauerstoff angereicherte Luft sein.

Der Stoffstrom III umfasst oder besteht im wesentlichen aus einem oder mehreren Brenngasen. Diese werden bevorzugt aus der Gruppe bestehend aus Wasserstoff, Methan, Ethan und/oder Propan ausgewählt. Besonders bevorzugt ist Wasserstoff.

Der Stoffstrom IV umfasst die dampfförmige, hydrolysierbare und/oder oxidierbare Siliciumverbindung und Sauerstoff.

Der Stoffstrom V umfasst die dampfförmige, hydrolysierbare und/oder oxidierbare Siliciumverbindung, Sauerstoff und Brenngas.

Mittels des optionalen Stoffstromes VI kann Sauerstoff. Brenngas und/oder Wasserdampf in die Reaktionskammer eingebracht werden. Hierdurch kann die die Flamme beeinflusst und falls erforderlich stabilisiert werden.

Der Stoffstrom VII umfasst wenigstens die Reaktionsprodukte Kieselsäure und Wasser. Je nach Struktur der eingesetzten Siliciumverbindungen und des Brenngases können Kohlendioxid und Salzsäure hinzukommen.

Das erfindungsgemäße Verfahren kann weiterhin so ausgeführt werden, dass das Reaktionsgemisch nach Verlassen der Reaktionskammer und vor der Abtrennung des Feststoffes gekühlt, vorzugsweise auf Temperaturen von 80 bis 250°C, und nachfolgend mit Wasserdampf, vorzugsweise bei Temperaturen von 350 bis 750°C, behandelt wird.

### Beispiele

Als statische Mischelemente umfassende Rohrstück A und B werden CompaX Mischer der Firma Sulzer eingesetzt.

Beispiel 1: Der Stoffstrom I bestehend aus 8 kg/h dampfförmigem Siliciumtetrachlorid mit einer Geschwindigkeit v_{I} von 1,9 Nm/s wird über die punktuelle Einspeisestelle mit einem Durchmesser von 3 mm eines CompaX-Mischers A mit L_{A}/D_{A} = 5 in einen Stoffstrom II bestehend aus 11,9 Nm³/h Luft gemischt, die eine Geschwindigkeit v_{II} von 467,6 Nm/s aufweist. Die Geschwindigkeit v_{A} des resultierenden Stoffstromes IV beträgt 23,4 Nm/s. Mittels eines CompaX-Mischers B , mit dem Dimensionen L_{B}/D_{B} = 5 , dessen punktuelle Einspeisestelle einen Durchmesser von 1 mm aufweist, werden zu diesem Stoffstrom IV ein Stoffstrom III in Form von 3,9 Nm³/h Wasserstoff eingebracht. Die Geschwindigkeit v_{B} mit der der Stoffstrom III die punktuelle Einspeisestelle verläßt, beträgt 1379,3 Nm/s. Die Zuführung der Einsatzstoffe ist in Figur 2A wiedergegeben. Der resultierende Stoffstrom V wird über eine Düse mit einem Innendurchmesser von 15 mm in eine Reaktionskammer eingebracht, wodurch eine Geschwindigkeit v_{RK} von 26,5 Nm/s resultiert, und dort gezündet. Zusätzlich wird noch der Stoffstrom VI bestehend aus 18 Nm³/h Luft in die Reaktionskammer eingebracht. Der resultierende Stoffstrom VII, der nun Kieselsäurepartikel, Salzsäure, Wasserdampf und Luft enthält, wird zunächst auf eine Temperatur von 120 bis 150°C abgekühlt. Nachfolgend wird mittels eines Filters die Kieselsäure abgetrennt und diese bei einer Temperatur von 400 bis 500°C mit Wasserdampf behandelt.
Die Kieselsäure weist eine BET-Oberfläche von 186 m²/g und eine Verdickung von 3550 mPas bei 22 °C auf.

Die Beispiele 2 bis 8 werden analog durchgeführt, die Betriebseinstellungen sind der Tabelle zu entnehmen. Es ist ersichtlich, dass durch die unterschiedlichen Durchmesser der Einspeisestelle des Compax-Mischer B und der damit verbundenen Geschwindigkeiten v_{B} bei gleichen Dimensionen L_{A}, D_{A}, L_{B} und D_{B} annähernd gleichem v_{A}, Kieselsäuren mit annähernd gleicher BET-Oberfläche, 186 bis 218 m²/g, und deutlich unterschiedlicher Verdickung, 3575 bis 4250 mPas, erhalten werden.

Beispiel 9 wird analog Beispiel 1 durchgeführt, jedoch wird der Stoffstrom II über die punktuelle Einspeisestelle des CompaX-Mischers A in den Stoffstrom I gegeben. Ferner ist L_{A}/D_{A} = 3. Die Zuführung der Einsatzstoffe ist in Figur 2B wiedergegeben. Betriebsparameter und Stoffeigenschaften sind in der Tabelle wiedergegeben.

Die Beispiele 10 und 11 weisen die gleichen Betriebsparameter wie Beispiel 9 auf, mit der Ausnahme, dass die Länge des statische Mischelemente umfassenden Rohstückes A variiert wurde. So ist L_{A}/D_{A} in Beispiel 9 gleich 3, in Beispiel 10 gleich 6 und in Beispiel 11 gleich 15. Bei annähernd gleicher BET-Oberfläche der erhaltenen Kieselsäuren variiert die Verdickung deutlich, von 3085 bis 3495 mPas.

In Beispiel 12 wird ein Gemisch von Methyltrichlorsilan und Siliciumtetrachlorid eingesetzt. Es wird bei annähernd gleicher BET-Oberfläche wie in den Beispielen 1 bis 11 eine Kieselsäure mit sehr niedriger Verdickung erhalten.

**Tabelle: Betriebsparameter und Stoffeigenschaften**

| **Beispiel** | | **1** | **2** | **3** | **4** | **5** | **6** | **7** | **8** | **9** | **10** | **11** | **12** |
|---|---|---|---|---|---|---|---|---|---|---|---|---|---|
| Stoffstrom I | | | | | | | | | | | | | |
| SiCl₄ | kg/h | 8 | 8 | 8 | 8 | 8 | 8 | 8 | 8 | 8 | 8 | 8 | 6^{a)} |
| v_{I} | Nm/s | 1,9 | 1,9 | 1,9 | 1,9 | 1,9 | 1,9 | 1,9 | 1,9 | 1,9 | 1,9 | 1,9 | 1,6 |

| Stoffstrom II^{b}) | | | | | | | | | | | | | |
|---|---|---|---|---|---|---|---|---|---|---|---|---|---|
| Luft | Nm³/h | 11,9 | 12,3 | 12,1 | 12 | 11,9 | 11,95 | 12,05 | 12,05 | 13,2 | 13,2 | 13,2 | 12,9 |
| v_{II} | Nm/s | 467,6 | 483,4 | 475,5 | 471,6 | 467,6 | 469,6 | 473,5 | 473,5 | 518,7 | 518,7 | 518,7 | 506,9 |
| v_{A} | Nm/s | 23,4 | 24,1 | 23,7 | 23,6 | 23,4 | 23,5 | 23,6 | 23,6 | 25,7 | 25,7 | 25,7 | 24,9 |

| Stoffstrom III | | | | | | | | | | | | | |
|---|---|---|---|---|---|---|---|---|---|---|---|---|---|
| H₂ | Nm³/h | 3,9 | 3,9 | 3,9 | 3,9 | 3,9 | 3,9 | 3,9 | 3,9 | 3,9 | 3,9 | 3,9 | 1,5 |
| Ø-Bohrung | Mm | 1,0 | 1,2 | 1,4 | 1,6 | 1,9 | 2,2 | 2,6 | 3,6 | 3 | 3 | 3 | 3 |
| v_{B} | Nm/s | 1379,3 | 957,9 | 703,7 | 538,8 | 382,1 | 285,0 | 204,0 | 106,4 | 153,3 | 153,3 | 153,3 | 516,4 |
| v_{B}/v_{A} | | 59,0 | 39,7 | 29,6 | 22,9 | 16,3 | 12,1 | 8,6 | 4,5 | 6,0 | 6,0 | 6,0 | 20,8 |

| Stoffstrom V^{c)} | | | | | | | | | | | | | |
|---|---|---|---|---|---|---|---|---|---|---|---|---|---|
| lambda^{d)} | | 1,3 | 1,3 | 1,3 | 1,3 | 1,3 | 1,3 | 1,3 | 1,3 | 1,4 | 1,4 | 1,4 | 1,3 |
| v_{RK}^{e)} | Nm/s | 26,5 | 27,1 | 26,8 | 26,7 | 26,5 | 26,6 | 26,7 | 26,7 | 28,5 | 28,5 | 28,5 | - |

| Stoffstrom VI | | | | | | | | | | | | | |
|---|---|---|---|---|---|---|---|---|---|---|---|---|---|
| Luft | Nm³/h | 18,0 | 18,0 | 18,0 | 18,0 | 18,0 | 18,0 | 18,0 | 18,0 | 19,0 | 19,0 | 19,0 | 18 |

| Kieselsäure | | | | | | | | | | | | | |
|---|---|---|---|---|---|---|---|---|---|---|---|---|---|
| BET | m²/g | 186 | 214 | 218 | 199 | 200 | 204 | 206 | 208 | 207 | 204 | 203 | 205 |
| Verdickung | mPas | 3550 | 4250 | 3955 | 3625 | 3600 | 3575 | 3770 | 4070 | 3340 | 3085 | 3495 | 2580 |

| | | | | | | | | | | | | | |
|---|---|---|---|---|---|---|---|---|---|---|---|---|---|
| a) 75:25 Gewichtsanteile CH₃SiCl₃/SiCl₄; b) Durchmesser der Bohrung Einspeisestelle Stoffstrom II in Stoffstrom I: 3 mm; c) Durchmesser Einspeisestelle Stoffstrom V in Reaktionskammer:15 mm; d) Gamma in allen Beispielen 1,9; e) Geschwindigkeit bei Einspeisung in Reaktionskammer | | | | | | | | | | | | | |

## Patentansprüche

1. Verfahren zur Herstellung von Kieselsäure mit variabler Verdickung, bei dem man
a) einen Stoffstrom I enthaltend wenigstens eine dampfförmige, hydrolysierbare und/oder oxidierbare Siliciumverbindung,
b) einen Stoffstrom II enthaltend Sauerstoff und
c) einen Stoffstrom III enthaltend wenigstens ein Brenngas zur Reaktion bringt,
**dadurch gekennzeichnet, dass** man
d) über eine in einem Rohrstück A vorgesehenen Einspeisestelle, wobei das Rohrstück A ein oder mehrere statische Mischelemente umfasst, den Stoffstrom I in den Stoffstrom II oder umgekehrt einbringt und dadurch den Stoffstrom IV erzeugt, anschließend
e) über eine in einem Rohrstück B vorgesehenen Einspeisestelle, wobei das Rohrstück B ein oder mehrere statische Mischelemente umfasst,
in den Stoffstrom IV den Stoffstrom III einbringt und dadurch den Stoffstrom V erzeugt,
f) den das Rohrstück B verlassenden Stoffstrom V in eine Reaktionskammer einbringt, dort zündet und in einer Flamme umsetzt und
g) den entstandenen Feststoff abtrennt, wobei
die Geschwindigkeit v_{B} mit der der Stoffstrom III in den Stoffstrom IV eingebracht wird größer ist als die Geschwindigkeit v_{A} des Stoffstromes IV zum Zeitpunkt des Einbringens des Stoffstromes III und wobei sich
v_{A} durch Division des Volumenstromes mit der Einheit Nm³/h und der Querschnittsfläche des Rohrstückes A ergibt und
v_{B} durch Division des Volumenstromes mit der Einheit Nm³/h und der Querschnittsfläche der Einspeisestelle ergibt.

2. Verfahren nach Anspruch 1, **dadurch gekennzeichnet, dass** das statische Mischelemente umfassende Rohrstück als Flanschmischer ausgelegt ist.

3. Verfahren nach Anspruch 2, **dadurch gekennzeichnet, dass** der Flanschmischer eine einzige punktuelle Einspeisestelle aufweist.

4. Verfahren nach den Ansprüchen 1 bis 3, **dadurch gekennzeichnet, dass** v_{B}/v_{A} ≥ 4.

5. Verfahren nach den Ansprüchen 1 bis 4, **dadurch gekennzeichnet, dass** v_{A} wenigstens 15 Nm/s beträgt.

6. Verfahren nach den Ansprüchen 1 bis 5, **dadurch gekennzeichnet, dass** v_{B} ≥ 50 Nm/s ist.

7. Verfahren nach den Ansprüchen 1 bis 6, **dadurch gekennzeichnet, dass** L_{A}/D_{A} = 2-20 ist, mit L_{A} = Länge des Rohrstückes A, D_{A} = innerer Durchmesser des Rohrstückes A.

8. Verfahren nach den Ansprüchen 1 bis 7, **dadurch gekennzeichnet, dass** L_{B}/D_{B} = 2-20 ist, mit L_{B} = Länge des Rohrstückes B, D_{B} = innerer Durchmesser des Rohrstückes B.

9. Verfahren nach den Ansprüchen 1 bis 8, **dadurch gekennzeichnet, dass** die Menge an Sauerstoff wenigstens ausreicht um die Siliciumverbindung und das Brenngas umzusetzen.

10. Verfahren nach den Ansprüchen 1 bis 9, **dadurch gekennzeichnet, dass** als dampfförmige, hydrolysierbare und/oder oxidierbare Siliciumverbindung SiCl₄, CH₃SiCl₃, (CH₃)₂SiCl₂, (CH₃)₃SiCl, (CH₃)₄Si, HSiCl₃, (CH₃)₂HSiCl, CH₃CH₂CH₂SiCl₃, Si(OC₂H₅)₄, Si(OCH₃)₄ oder Mischungen hiervon eingesetzt werden.

11. Verfahren nach den Ansprüchen 1 bis 10, **dadurch gekennzeichnet, dass** man in die Reaktionskammer einen Sauerstoff und/oder Wasserdampf enthaltenden Stoffstrom VI führt.

12. Verfahren nach den Ansprüchen 1 bis 11, **dadurch gekennzeichnet, dass** es als weitere Reaktionsschritte eine Kühlung des Reaktionsgemisches und eine Behandlung mit Wasserdampf umfasst.

## Claims

1. Process for production of silica having variable thickening wherein
a) a product stream I comprising at least a vaporous, hydrolysable and/or oxidizable silicon compound,
b) a product stream II comprising oxygen and
c) a product stream III comprising at least a combustible gas
are made to react,
**characterized in that**
d) a feed port in a pipepiece A, said pipepiece A comprising one or more static mixing elements, is used to import product stream I into product stream II, or vice versa and thereby create product stream IV, then
e) a feed port in a pipepiece B, said pipepiece B comprising one or more static mixing elements, is used to import product stream III in product stream IV and thereby create product stream V,
f) product stream V leaving pipepiece B is imported into a reaction chamber, ignited therein and reacted in a flame, and
g) the resultant solid material is separated off,
wherein the velocity v_{B} at which product stream III is imported into product stream IV is greater than the velocity v_{A} of product stream IV at the time of importation of product stream III and wherein v_{A} is the result of dividing the volume flow in Nm³/h by the cross-sectional area of pipepiece A and v_{B} is the result of dividing the volume flow in Nm³/h by the cross-sectional area of the feed port.

2. Process according to Claim 1, **characterized in that**
the pipepiece comprising static mixing elements is designed as a flange mixer.

3. Process according to Claim 2, **characterized in that**
the flange mixer has a single punctiform feed port.

4. Process according to Claims 1 to 3, **characterized in that**
v_{B}/v_{A} ≥ 4.

5. Process according to Claims 1 to 4, **characterized in that**
v_{A} is at least 15 Nm/s.

6. Process according to Claims 1 to 5, **characterized in that**
v_{B} ≥ is 50 Nm/s.

7. Process according to Claims 1 to 6, **characterized in that**
L_{A}/D_{A} is = 2 - 20, where L_{A} = length of pipepiece A, D_{A} = internal diameter of pipepiece A.

8. Process according to Claims 1 to 7, **characterized in that**
L_{B}/D_{B} is = 2 - 20, where L_{B} = length of pipepiece B, D_{B} = internal diameter of pipepiece B.

9. Process according to Claims 1 to 8, **characterized in that**
the amount of oxygen is at least sufficient to convert the silicon compound and the combustible gas.

10. Process according to Claims 1 to 9, **characterized in that**
the vaporous, hydrolysable and/or oxidizable silicon compound used comprises SiCl₄, CH₃SiCl₃, (CH₃)₂SiCl₂, (CH₃)₃SiCl, (CH₃)₄Si, HSiCl₃, (CH₃)₂HSiCl, CH₃CH₂CH₂SiCl₃, Si(OC₂H₅)₄, Si(OCH₃)₄ or mixtures thereof.

11. Process according to Claims 1 to 10, **characterized in that**
a product stream VI comprising oxygen and/or steam is introduced into the reaction chamber.

12. Process according to Claims 1 to 11, **characterized in that**
it comprises further reaction steps of cooling the reaction mixture and a treatment with steam.

## Revendications

1. Procédé de fabrication de silice ayant un épaississement variable, selon lequel
a) un courant de matière I contenant au moins un composé de silicium sous forme vapeur, hydrolysable et/ou oxydable,
b) un courant de matière II contenant de l'oxygène et
c) un courant de matière III contenant au moins un gaz de combustion
sont mis en réaction,
**caractérisé en ce que**
d) le courant de matière I est introduit dans le courant de matière II ou inversement par un emplacement d'introduction prévu dans un tronçon de tube A, le tronçon de tube A comprenant un ou plusieurs éléments de mélange statiques, et le courant de matière IV est ainsi formé, puis
e) le courant de matière III est introduit dans le courant de matière IV par un emplacement d'introduction prévu dans un tronçon de tube B, le tronçon de tube B comprenant un ou plusieurs éléments de mélange statiques, et le courant de matière V est ainsi formé,
f) le courant de matière V quittant le tronçon de tube B est introduit dans une chambre de réaction, y est allumé et mis en réaction dans une flamme, et
g) le solide formé est séparé,
la vitesse v_{B} à laquelle le courant de matière III est introduit dans le courant de matière IV étant supérieure à la vitesse v_{A} du courant de matière IV au moment de l'introduction du courant de matière III, et v_{A} étant obtenue par division du débit volumique en l'unité Nm³/h et de la surface de section transversale du tronçon de tube A, et
v_{B} étant obtenue par division du débit volumique en l'unité Nm³/h et de la surface de section transversale de l'emplacement d'introduction.

2. Procédé selon la revendication 1, **caractérisé en ce que** le tronçon de tube comprenant des éléments de mélange statiques est configuré sous la forme d'un mélangeur à brides.

3. Procédé selon la revendication 2, **caractérisé en ce que** le mélangeur à brides comprend un emplacement d'introduction ponctuel individuel.

4. Procédé selon les revendications 1 à 3, **caractérisé en ce que** v_{B}/v_{A} ≥ 4.

5. Procédé selon les revendications 1 à 4, **caractérisé en ce que** v_{A} est d'au moins 15 Nm/s.

6. Procédé selon les revendications 1 à 5, **caractérisé en ce que** v_{B} ≥ 50 Nm/s.

7. Procédé selon les revendications 1 à 6, **caractérisé en ce que** L_{A}/D_{A} = 2 à 20, avec L_{A} = longueur du tronçon de tube A, D_{A} = diamètre intérieur du tronçon de tube A.

8. Procédé selon les revendications 1 à 7, **caractérisé en ce que** L_{B}/D_{B} = 2 à 20, avec L_{B} = longueur du tronçon de tube B, D_{B} = diamètre intérieur du tronçon de tube B.

9. Procédé selon les revendications 1 à 8, **caractérisé en ce que** la quantité d'oxygène est au moins suffisante pour transformer le composé de silicium et le gaz de combustion.

10. Procédé selon les revendications 1 à 9, **caractérisé en ce que** SiCl₄, CH₃SiCl₃, (CH₃)₂SiCl₂, (CH₃)₃SiCl, (CH₃)₄Si, HSiCl₃, (CH₃)₂HSiCl, CH₃CH₂CH₂SiCl₃, Si (OC₂H₅)₄, Si(OCH₃)₄ ou des mélanges de ceux-ci sont utilisés en tant que composé de silicium sous forme vapeur, hydrolysable et/ou oxydable.

11. Procédé selon les revendications 1 à 10, **caractérisé en ce qu'**un courant de matière VI contenant de l'oxygène et/ou de la vapeur d'eau est introduit dans la chambre de réaction.

12. Procédé selon les revendications 1 à 11, **caractérisé en ce qu'**il comprend un refroidissement du mélange réactionnel et un traitement avec de la vapeur d'eau en tant qu'étapes de réaction supplémentaires.
